# EUROPEAN PATENT SPECIFICATION

(11) **EP 1 604 512 B1**
(45) Date of publication and mention of the grant of the patent: **12.01.2011**
(21) Application number: 04716286.2
(22) Date of filing: 02.03.2004
(51) Int. Cl.: H04M 3/523

(54) **SCRIPT-ORIENTED DIALOG ASSISTANCE FOR AN OPERATOR OF A CALL CENTER**
SCRIPTORIENTIERTE DIALOGUNTERSTÜTZUNG FÜR DEN BEDIENER EINER ANRUFZENTRALE
PROCEDE, SYSTEME ET GENERATEUR DE SCRIPT POUR L'ACHEMINEMENT DE DIALOGUES GUIDES PAR SCRIPT ENTRE L'OPERATEUR D'UN CENTRE D'APPEL ET UN CLIENT

(30) Priority: 11.03.2003 EP 03100616
(43) Date of publication of application: 14.12.2005
(73) Proprietor: Philips Intellectual Property & Standards GmbH, 20099 Hamburg (DE); Koninklijke Philips Electronics N.V., 5621 BA Eindhoven (NL)
(72) Inventor: MONTVAY, Andras c/o Philips Intellectual, Weisshausstr. 2 D-52066 Aachen (DE); MÜHLSTEFF, Jens c/o Philips Intellectual, Weisshausstr. 2 D-52066 Aachen (DE); REITER, Harald c/o Philips Intellectual, Weisshausstr. 2 D-52066 Aachen (DE); SCHMIDT, Ralf c/o Philips Intellectual, Weisshausstr. 2 D-52066 Aachen (DE); SUCH, Olaf c/o Philips Intellectual Property, D-52066 Aachen (DE); LAUTER, Josef c/o Philips Intellectual, D-52066 Aachen (DE)
(74) Representative: Volmer, Georg
(86) International application number: PCT/IB2004/000660
(87) International publication number: WO 2004/081701

(56) References cited:
- EP-A- 1 280 080
- WO-A-02/073449
- US-A1- 2002 031 212
- ARNOLD K ET AL: "MEDIA-INDEPENDENT INTERFACES IN A MEDIA-DEPENDENT WORLD" CONFERENCE ON OBJECT-ORIENTED TECHNOLOGIES, XX, XX, 1995, pages 195-203, XP000602856

## Description

The invention relates to a method of routing a dialog between an operator of a call center and a customer by means of a communication script, said communication script being arranged to follow a scenario corresponding to a customer's case by presenting a plurality of messages to the operator.

The invention further relates to a system arranged to route a dialog between an operator of a call center and a customer, said system comprising a communication script arranged to follow a scenario corresponding to a customer's case by means of presenting a plurality of messages to the operator.

The invention still further relates to a generator of a script, said script being conceived to enable a routing of a dialog between an operator of a call center and a customer.

A method as set forth in the opening paragraph is known from WO 00/33226. In the known method a nested sequence of messages is defined by a communication script which is then presented to the operator in order to provide a support during a dialog with the customer. The messages of the known method comprise questions, which are arranged in such a way that an answer to each question automatically leads to a certain next question of the script. The selection of the next question to be put by the operator to the customer is determined by a hierarchical structured pages which comprise a structured set of questions and is governed by an a-priory defined architecture of the communication script.

It is a disadvantage of the known method that there is a predefined sequence of questions and/or instructions that have to be followed by both the agent of the call center and the customer. This implies that the system can only handle cases, which have a well foreseen scenario of their development during a design phase of the script. Therefore the known approach is less suitable for situations, where many different spontaneous changes to the situation can occur. In particular, for emergency situations there is a need for a script which can support unpredictable dynamics in an evolution of the case scenario.

US 2002/031212 A1 discloses an intelligent data network call setup system forwards data network user information to an operator, for example, for a call with a data network user. The intelligent data network call set up system monitors the data network user's actions and generates information that summarizes potential reasons for the data network user's call and forwards such information as preamble information to the operator. The intelligent data network call set up system includes a call coordination device that serves as an interface between the data network user and the operator. The call coordination device supports web sites visited by data network users and when a request for a call is received, the call coordination device provides the operator with the user's action history, and other helpful information to the operator such as products that may interest the user to avoid the undesirable "cold start" experience. In this way, the operator may be more knowledgeable and helpful to the user.

EP-A-1 280 080 discloses a method of modelling user behaviour for use in predicting user actions in respect of an event, where a user action is one of a predefined set of actions. An event may be, for example, receipt of a phone call from a caller, in which case the user action is one of answer call, or divert call to voicemail. The method comprises the steps of identifying one or more user characteristics; creating a user model comprising at least one of the identified user characteristics; for the or each identified user characteristic; receiving data relating to an event; inputting the received data to one or more rules associated with the identified characteristic; processing the or each rule, thereby generating an output representative of a user action; combining outputs to generate a predicted action associated with the user; comparing the predicted action with an observed user action in respect of the event; and modifying the user model in accordance with a result of the comparison. Thus rather than using an attribute/value representation, a user model representation is used to predict user actions.

It is an object of the invention to provide a method of routing a dialog between the operator of the call center and the customer, said dialog being supported by a communication script, where said script can enable a fast reaction to sudden changes in the customer's situation and to guide the dialog without forcing it into a certain predetermined direction.

To this end the method according to claim 1 is provided,

The technical measure of the invention is based on the insight that first, for a given customer's case a predefined default scenario can be selected, preferably from a database of scenarios stored at a side of a service provider, for example a call center. As long as the dialog with the customer carries on, the required selected messages to keep up with the dialog are complied so that at any time the most relevant selected message is made available to the operator in real-time. It must be understood that within the definitions of the current application the scenario comprises a logical tree with probable events, each event corresponding to a certain situation of the customer or a certain answer of the customer to a question put by the operator. For a generic call center dealing with diverse customer groups, first the type of the scenario corresponding to the customer's case is determined. An example of the scenario is a request for a banking operation, or for a travelling advice, or for a purchasing offer, etc. Also, it is possible that the scenario corresponds to a request for a medical assistance, or for help during a medical emergency. The determination of the type of the scenario can be carried out by means of an interrogation of the customer. Alternatively, it can be carried out automatically by means of a suitable hardware. For example, in case the dialog is triggered by a customer activating a dialogue option of a web site, the type of the scenario can be retrieved from a typification of the site. In case a specific call center is contacted by the customer, the typification of the call center can be used to determine the type of the scenario. For example, in case a police station is called and the customer is forwarded to a burglary stand-by unit the type 'burglary' is assigned to the scenario. For other cases the determination of the type of the corresponding scenario can be carried out correspondingly using the same principle. It is also possible that the dialog is triggered by monitoring means arranged at the premises of the customer or on his body. In this case the type of the suitable scenario is determined from the type of sensor which actuated a trigger call enabling the dialog. For example, for medical applications a physiological condition sensor can be arranged to initiate the dialog with a call center in case there is an abnormality in the physiological condition of an individual. In this case the monitoring system can forward the corresponding monitoring data or a tag defining the type of the scenario. An example of the scenario is a heart attack. In case the call center deals with a single type of the scenario, like a medical emergency a further specification of the medical emergency is then used as the type of the suitable initial scenario, like a bone fracture, or a cardiac insufficiency for example.

When the type of the scenario is determined, the current state of the scenario is established meeting a current condition of the customer's case. It is possible that the current state of the scenario meets a predefined default scenario. In this case the default scenario is loaded and the messages of the default scenario are presented to the operator. For the default scenario the messages are numbered, for example, the respective numbers being arranged to represent their respective relevance to the case. Alternatively, it can be that the customer's case has evolved in such a way that it meets only partly the default scenario, in this case necessary messages are selected by the communication script using a scenario evolution algorithm, which is arranged to simulate events based on suitable boundary conditions. When the scenario evolution algorithm creates a situation meeting the customer's case the script generator selects messages from a database meeting the simulated scenario. The selected messages are ranked, so that the most relevant message for the simulated state of the scenario is being ranked as the highest.

The messages are then presented to the operator of the call center so that he can start the dialog with the customer. As the dialog carries on the current state of the scenario is updated. It is possible that by answering the questions put by the operator or by supplying an additional information, the customer deviates from a predetermined default scenario or from a simulated new scenario. Therefore, there might be a need to jump to a different branch of the scenario, or to put forward a certain message, which was initially queued differently. In order to meet this deviation in real-time the determination of the current state of the scenario is carried out. When the current state of the scenario is determined and/or updated, the selected messages are ranked according to their relevance to said current state. In case the customer's case meets the default scenario, the relevance of the selected messages is preferably loaded from a prestored look-up table corresponding to the actual scenario. In case the scenario has evolved in such a way that it deviated from the default scenario, the scenario evolution algorithm calculates the relevancies of the messages to the scenario and/or signals to the script generator to load additional messages from the database. The selected messages together with their rank are then made available to the operator by means of a suitable user interface so that the operator can put forward the most relevant message to the customer meeting his demand in real-time. In order to compile the initial list of the selected messages, the messages are assigned an initial probability of their occurrence for the default scenario. As the scenario develops, the initial probabilities are overwritten by another probabilities determined by means of a suitable scenario evolution algorithm. An example of a suitable algorithm is an optimization of a suitable cost function. Examples of possible optimization methods are known per se for those skilled in the art and will not be explained here in detail.

In case the selected message is assigned the highest rank, it is preferably put on the top of the list of the selected messages by the user interface for the operator's convenience. In case the operator decides to pursue that message he can simply verbalize it. In case the selected message is a question, the customer will provide the answer which is then logged within the communications script. When this action is complete a number of actions can be triggered:
a relative relevance of the selected messages to the current state of the interactive scenario can be altered, leading to an alteration of the position of one or more of the selected messages in the list;
- one or more questions can be answered implicitly, for example about a location of the customer, or a condition of a victim in case of a medical emergency.

In order to enable such an implicit input of additional information, the selected messages comprises a configurable string, which can be edited by a text generator. An example of a suitable text generator is a voice recognition engine which is arranged to transform an audio input into a textual string. The text generator is preferably arranged to select a key word and to update the configurable textual string with said key word.

Preferably, the answered questions are arranged to form a question-answer pair and are stored in a separate list. This is advantageous for editing the answers in case the scenario develops in such a way that they are no longer valid. For example, if the question as to whether the victim is conscious has been answered 'yes', but now he fades, so the agent can correct the answer to 'no' and the actions associated with this answer can be performed. Preferably, such a question-answer pair is then put on the top of the list for the operator's convenience.

In case the interactive scenario is prognosed by means of a scenario evolution algorithm, it is preferable that the method further comprises the steps of:
- keeping a flowchart of selected messages during the dialog;
- determining a roadmap within said flowchart;
- upon a completion of the script updating the scenario evolution algorithm based on said roadmap.

By updating the scenario evolution algorithm, the communication script can be enriched with a fine decision tree based on statistics of a usage of the selected messages. Messages that the agent chooses to use despite them being low on the list at that time are logged. Similarly, the questions which are ranked high but never get selected by the operator are logged. These dialog logs can be used by the scenario evolution algorithm to validate a probabilistic model of a scenario development.

These and other aspects of the invention will be further explained with reference to figures.
Figure 1 presents a schematic view of an embodiment of the system according to the invention.
Figure 2 presents a schematic view of an embodiment of an operation of a script generator according to the invention.
Figure 3 presents a schematic view of an embodiment of an operation of the scenario evolution algorithm.
Figure 4 presents a schematic view of an embodiment of an operation of a probabilistic model.
Figure 5 presents an embodiment of a user interface of the system according to the invention.

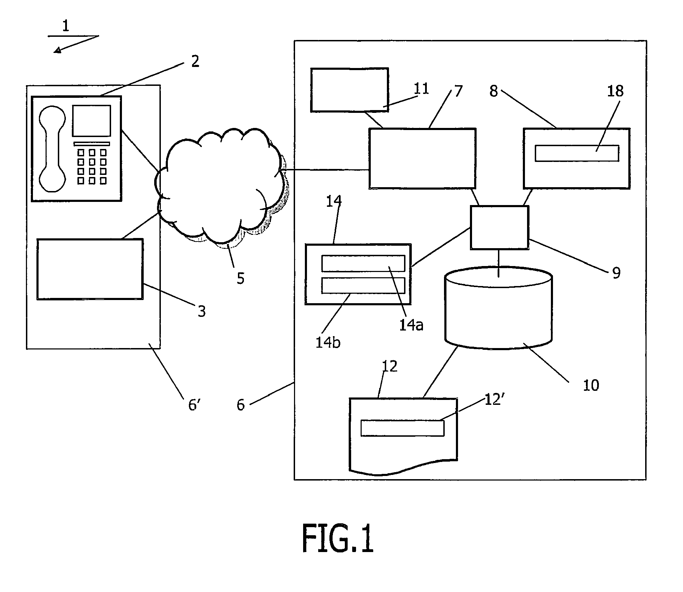

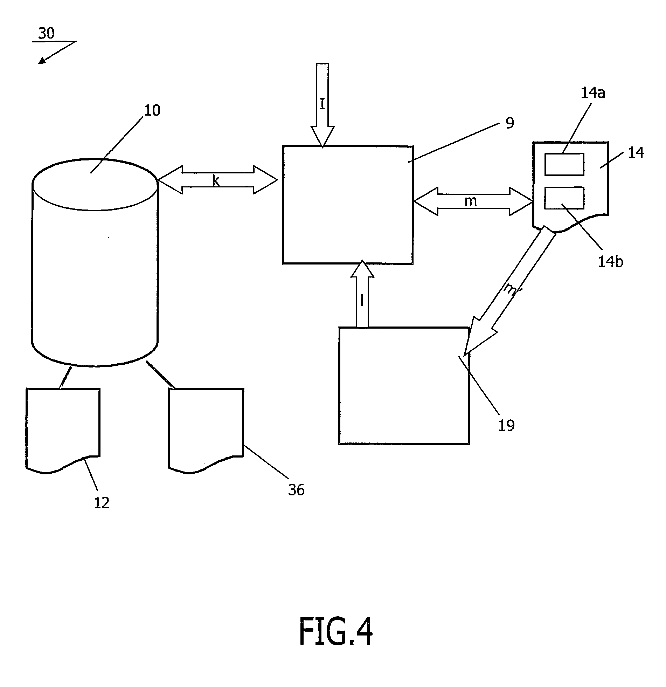

Figure 1 presents a schematic view of an embodiment of the system according to the invention. The system 1 comprises a user-side 6' and a remote side 6 connectable to the user side 6' by means of a telephony network 5. The remote side 6, for example a call center comprises storage means 10 for storing a plurality of predefined scenarios 12, each scenario being arranged to meet a predetermined type of a customer's case. The storage means 10 are further arranged to store a plurality of messages 12' related to said scenarios 12. An example of a suitable storage means 10 is a database on a personal computer. The remote side 6 comprises means 7 arranged to receive a customer's case. An example of a suitable means to receive the customer's case is a telephony unit or a modem. The system 1 still further comprises means 3 for retrieving a type of the scenario corresponding to the customer's case. Means 3 for retrieving the type of the scenario corresponding to the customer's case can comprise a telephony unit or a modem. Alternatively it is possible that means 3 for retrieving the type of the scenario comprise monitoring means arranged to monitor a predetermined event, said monitoring means being further arranged to forward a type of said event to the call center by means of a telephony unit 2 connectable to the telephony network 5. In case means 7 of the remote side 6 are arranged to receive the customer's case said means are preferably arranged to determine the type of the scenario corresponding to said case. The remote side 6 according to the invention further comprises means 11 arranged to determine a current state of the scenario. For example said means 11 can comprise a voice recognition engine (not shown) arranged to detect a key word in a communication between the operator of the call center and the customer and to adapt the scenario accordingly by using a scenario evolution algorithm 14. The remote side 6 further comprises a generator of a communication script 9 arranged to select a plurality of messages (not shown) from a database of messages 12' in compliance with the type of the scenario meeting the customer's case and the current state of the scenario. The remote side 6 further comprises a user interface 8 arranged to present the selected messages in a list 18 to the operator (not shown). In order to compile said list the generator 9 of the script is arranged to communicate with a scenario evolution algorithm 14, said algorithm being arranged to update a current state of a default scenario based on an interaction with the customer. For that purpose the scenario evolution algorithm 14 comprises a probabilistic model 14a and a ranking means 14b. The probabilistic model 14a is arranged to determine a most probable next event within a selected scenario. An example of the operation of the probabilistic model will be explained with reference to Figure 4. The result of the probability model is a relevancy assigned to a message in the list 18 of selected messages. The ranking means 14b then rank the selected messages according to their respective relevancy to the scenario. For example, the selected message with the highest relevancy is prescribed the highest rank and is put on the top of the list by the script generator 9. The user interface 8 presents the list 18 of ranked messages to the operator. The operator can then select the message with the highest rank in order to follow the scenario. In this way an effective routing of the dialog between the operator of the call center and the customer is enabled, said dialog meeting real-time changes in the situation of the customer.

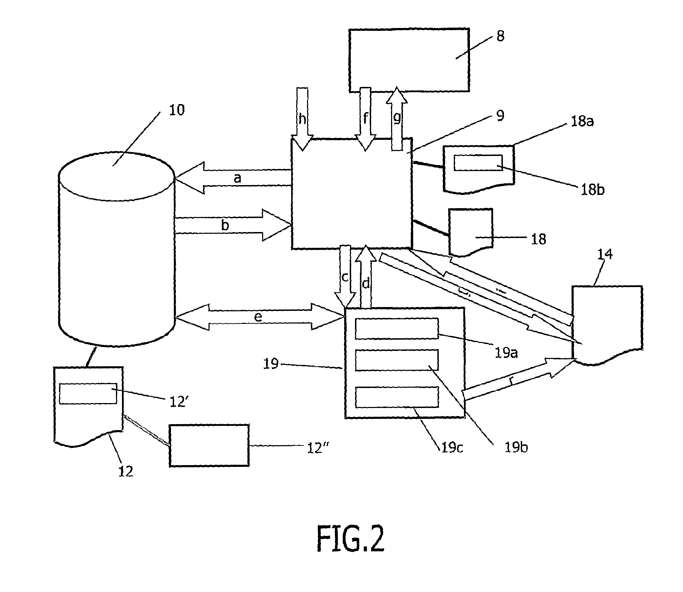

Figure 2 presents a schematic view of an embodiment of an operation of a script generator according to the invention. The script generator 9 is arranged to receive the type of the customer's case as an initial input, this step being schematically illustrated by an arrow h. This step can be technically realized by means of a user interaction, for example when the operator of the call center enters a key word or any other suitable identification of the customer's case. Also, the type of the customer's case can be made available to the script generator 9 by a suitable hardware of the call center, for example by means of the telephony unit 7, shown in the Figure 1. Upon a receipt of the type of the customer's case, the script generator 9 is arranged to search for a prestored scenario meeting the type in a database 10 (arrow a). Preferably, the database 10 addresses the list of prestored default scenarios 12 according to the type. The database 10 is further arranged to make available prestored messages 12' to the script generator 9 upon a request. The database 10 is still further arranged to make available the corresponding probability of each message to the script generator 9. The corresponding probability for a default scenario is loaded from a prestored look-up table 12". It is possible that a certain message is included into a plurality of default scenarios. In this case a plurality of corresponding probabilities is stored for that message in the look-up table 12". A proper probability for the default scenario is selected in accordance with the type of the actual default scenario. When the default scenario meeting the type of the customer's case is selected, it is made available to the script generator 9 (arrow b). The script generator 9 is arranged to make available to the operator of the call center the list 18 comprising the default selected messages by means of the user interface 8 (arrow g). When the list 18 of the selected messages is made available to the customer by the operator, and, in case the messages comprise a question, upon a receipt of a customer's response to said question (arrow f), the list of messages is updated and the answer can be stored together with the corresponding question in a further list 18a as an answer-question pair 18b. Additionally, upon a receipt of an informative input from the customer, the default scenario is updated by the scenario evolution algorithm 14, which calculates the next most probable event (arrows i,j) and calculates probabilities for the selected messaged according to the current state of the scenario. This calculation can be carried out by means of a suitable decision support system, known per se in the art. Most of the decision support systems operate using an optimization algorithm of, for example a cost function. By minimization the cost function the next most probable event can be calculated. The scenario evolution algorithm 14 is preferably arranged to forward calculated probabilities of the selected messages together with the updated state in the scenario to the script generator 9 (arrows i,j). The script generator 9 uses the textual editor 19 to order the selected messages in the list (arrows c,d) and to make the updated list 18 available to the operator via the user interface 8. The text generator is further arranged to keep a flowchart 19a of the messages which were selected during the dialog with the customer. Upon a completion of said dialog the text generator 19 compiles a roadmap 19b of the selected messages within said flowchart. An example of a suitable roadmap is a table comprising initial ranks of the selected messages and the actual ranks, assigned by the scenario evolution algorithm 14. The text generator 19 further comprises a statistics chart 19c where the table 19b is being analyzed in order to deduce trends in changes of the initial ranks of the selected messages during the execution of the script. In case the statistics chart 19c detects a statistically relevant deviation between the actual rank and the initial rank, it triggers a report to the scenario evolution algorithm (arrow r) enabling an update of the algorithm accordingly.

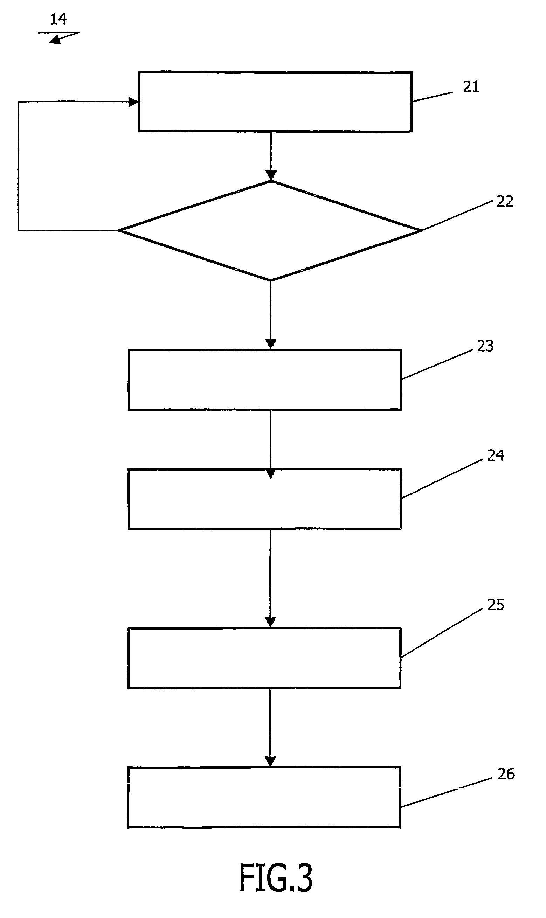

Figure 3 presents a schematic view of an embodiment of an operation of the scenario evolution algorithm. The scenario evolution algorithm 14 operates as follows: at step 21 the scenario evolution algorithm receives an information corresponding to a state of the scenario meeting the customer's case. At step 22 a comparison between the received state in the scenario and a default state corresponding to an evolution of the default scenario is made. In case the received state of the scenario meets the default state no action is performed and the relative relevance of the selected messages is kept unchanged. In case the actual scenario has evolved differently with respect to the default scenario, the scenario evolution algorithm goes further to step 23. At this step, a suitable decision support system is started. The resulting calculation presents a most probable next step in the scenario based on the informative input from the customer. When the next step in the scenario is calculated, the selected messages are assigned new probabilities at step 24. At step 25 the initial probabilities of the selected questions are overwritten by the calculated probabilities. The selected messages are then ranked according to their relative probabilities and made available to the script generator at step 26.

Figure 4 presents a schematic view of an embodiment of an operation of a probabilistic model 30. The scenario evolution algorithm 14 receives the list of selected messaged from the script generator 9 (arrow m) upon a determination of a type (not shown) of a scenario which meets the customer's case. The list of the selected messages is loaded by the script generator 9 from the database 10 (arrow k) using a list of scenarios 12 and a look-up table 36 arranged for storing types of default scenarios. When an informative input is received from the customer (I), the selected messages (not shown) are updated or are provided with an answer by means of a text generator 19. After a completion of this operation the current probabilities are calculated to each selected message using means for assigning the probability (14a). For example, a certain message can be assigned a high probability (close to 1) if it is the most relevant one at the current state of the scenario. For example, in a medical scenario if a victim has collapsed, the most probable message is an inquiry 'Is a victim conscious?'. Alternatively, a just answered question can be assigned a very low probability, as it is highly improbable that this question must be answered at the next step. Still alternatively, a new probability for a selected message can be calculated as a function of an old value, for example (1+old value)/2 to move the message closer to the top of the list or (old value)/2 to move it lower. The ranking means 14b are arranged to rank the selected messages according to their probability. It is also possible that a number of selected messages are grouped as they correspond to one step in the scenario. In this case their probabilities can be scaled together. Once the probabilistic model has calculated the probabilities of the selected messages in accordance with an expected scenario evolution given by the scenario evolution algorithm 14, the list of the selected messages (not shown) is recompiled by the text generator 19 (arrow m') and is made available to the script generator 9 (arrow I).

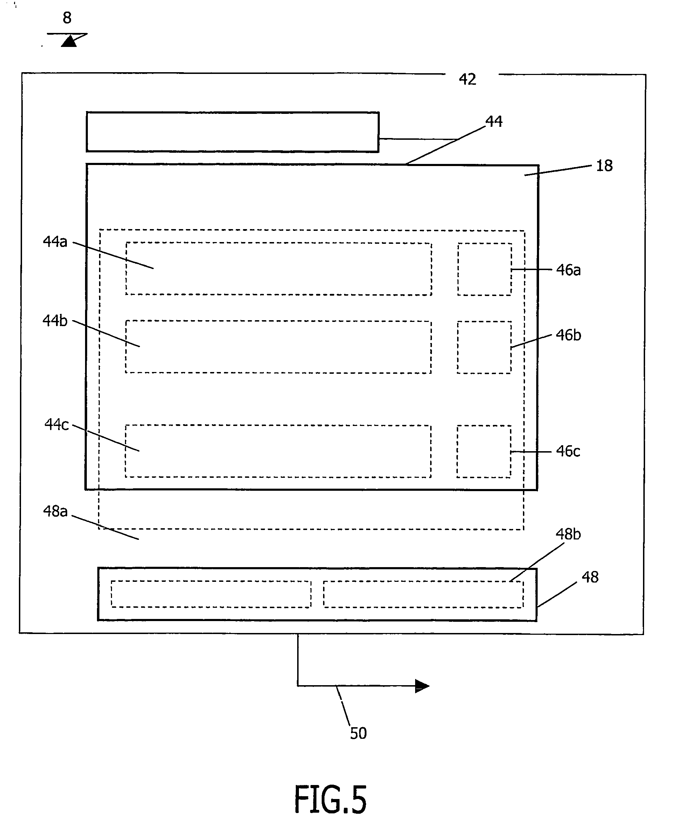

Figure 5 presents an embodiment of a user interface 8 of the system according to the invention. The user interface 8 in this example is arranged to support the operator of the call center (not shown) for routing the selected predefined communication script according to a change in the situation of the customer in real-time. Upon a receipt of the customer's case by the call center, the user interface 8 is activated. The user interface is arranged to select a key word 42 or any other suitable identification pointing at the type of the customer's case. Upon a selection of the type of the customer's case by the operator or automatically by the system, the default script 44 corresponding to the customer's case is loaded from the database (not shown). The default script 44 comprises a list 18 with a plurality of selected messages 44a, 44b, 44c which correspond to the current state in the scenario. Initially, the order of the messages corresponds to the default order. The respective relevancies of the selected messaged to the scenario are indicated to the operator by means of flags 46a, 46b, 46c. A plurality of suitable flags is possible. Preferably sequential numerals or letters are used for this purpose. Also, a color code or a gray-scale code is possible. When the operator selects one of the messages from the list 18 the message is highlighted in a field 48 for the operator's convenience. In case the message comprises a question, the field 48 is preferably provided with a possible default answer 48a which is then selected by the operator upon a receipt of an answer from the customer. Alternatively, the string 48 can be arranged to have a free space 48b where the operator can type the answer or a key word indicating a response of the customer. The received answer is then made available to the script generator (this interaction is schematically illustrated by an arrow 50) for updating the list 18 of the selected messages. When the new list of the selected messages is compiled by means of the text generator (not shown) the new list is made available to the operator. In this way the operator can route the dialog with the customer which will increase the efficiency of the communication due to a prompt response to possible changes in the customer's situation in real time.

Although embodiments of the method and the system according to the invention are illustrated in the accompanying drawings and described in the foregoing detailed description, it will be understood by those skilled in the relevant art that the invention is not limited to the embodiments disclosed, but is capable of numerous rearrangements, modifications and substitutions without departing the scope of the invention as set forth and defined in the following claims.

## Claims

1. A method of routing a dialog between an operator of a call center and a customer by means of a communication script, said communication script being arranged to follow a scenario corresponding to a customer's case by presenting a plurality of messages to the operator, said method comprising the steps of:
- determining a type of said scenario;
- determining a current state of said scenario;
- providing the communication script corresponding to said type, said script being arranged to select a plurality of messages from a database of messages in order to yield selected messages, said selection being carried out in compliance with said type and said state;
the method being **characterized by**:
- for each selected message assigning a relative relevance to the current state of the scenario by assigning a default probability to each selected message within the scenario for a standard evolution of the scenario, said default probabilities being loaded from a prestored look-up table by the communication script;
- ranking the selected messages, a message with a higher relative relevance to the current state of the scenario being ranked higher; and
- presenting the plurality of said selected messages together with their rank to the operator in a list by means of a user interface.

2. A system (6) arranged to route a dialog between an operator of a call center and a customer, said system comprising a communication script (44) arranged to follow a scenario corresponding to a customer's case by means of presenting a plurality of messages to the operator, said system further comprising:
- means (3,7) for determining a type of the scenario;
- means (11) for determining a current state of the scenario;
**characterized by** further comprising:
- a generator (9) of the communication script (44), said generator being arranged to select a plurality of messages (44a, 44b, 44c) from a database of messages (10) in compliance with said type and said current state in order to obtain a plurality of selected messages;
- ranking means (14b) arranged to rank the selected messages by assigning a default probability to each selected message within the scenario for a standard evolution of the scenario, said default probabilities being loaded from a prestored look-up table by the communication script, the message with a higher relevance to the current state of the scenario being ranked higher;
- a user interface (8) arranged to present the selected messages together with their rank (46a, 46b, 46c) to the operator in a list (18).

3. A system according to Claim 2, wherein the selected messages (44a, 44b, 44c) comprise a configurable textual string (48), said system further comprising a text generator (34) arranged to configure said string.

4. A system (6) according to claim 2 wherein the dialog is triggered by monitoring means arranged at the premises of the customer or by monitoring means arranged on his body.

5. A system (6) according to claim 4 wherein the monitoring means comprise a physiological condition sensor arranged to initiate the dialog with the call center in case there is an abnormality in the physiological condition of the customer.

## Patentansprüche

1. Verfahren zum Weiterleiten eines Dialogs zwischen einem Bediener einer Anrufzentrale und einem Kunde mit Hilfe eines Kommunikationsscripts, wobei das genannte Kommunikationsscript vorgesehen ist, um einem dem Kundenfall entsprechenden Szenario zu folgen, indem dem Bediener eine Vielzahl von Nachrichten vorgelegt wird, wobei das genannte Verfahren die folgenden Schritte umfasst:
- Ermitteln eines Typs des genannten Szenarios;
- Ermitteln eines aktuellen Status des genannten Szenarios;
- Bereitstellen des dem genannten Typ entsprechenden Kommunikationsscripts, wobei das genannte Script vorgesehen ist, um eine Vielzahl von Nachrichten aus einer Nachrichtendatenbank auszuwählen, um ausgewählte Nachrichten zu ergeben, wobei das genannte Auswählen in Übereinstimmung mit dem genannten Typ und dem genannten Status erfolgt;
wobei das Verfahren **dadurch gekennzeichnet ist, dass**:
- dem aktuellen Status des Szenarios für jede ausgewählte Nachricht eine relative Relevanz zugewiesen wird, indem jeder ausgewählten Nachricht innerhalb des Szenarios eine Standardwahrscheinlichkeit für eine Standardentwicklung des Szenarios zugewiesen wird, wobei die Standardwahrscheinlichkeiten durch das Kommunikationsscript aus einer zuvor gespeicherten Nachschlagetabelle geladen werden;
- die ausgewählten Nachrichten in eine Rangfolge gebracht werden, wobei eine Nachricht mit einer höheren relativen Relevanz für den aktuellen Status des Szenarios höherrangig eingestuft wird; und
- dem Bediener mittels einer Benutzerschnittstelle die Vielzahl der genannten ausgewählten Nachrichten zusammen mit ihrem Rang in einer Liste vorgelegt wird.

2. System (6), das vorgesehen ist, um einen Dialog zwischen einem Bediener einer Anrufzentrale und einem Kunden weiterzuleiten, wobei das genannte System ein Kommunikationsscript (44) umfasst, das vorgesehen ist, um einem dem Kundenfall entsprechenden Szenario zu folgen, indem dem Bediener eine Vielzahl von Nachrichten vorgelegt wird, wobei das genannte System weiterhin Folgendes umfasst:
- Mittel (3, 7) zum Ermitteln eines Typs des genannten Szenarios;
- Mittel (11) zum Ermitteln eines aktuellen Status des genannten Szenarios;
**dadurch gekennzeichnet, dass** es weiterhin Folgendes umfasst:
- einen Generator (9) des Kommunikationsscripts (44), wobei der genannte Generator vorgesehen ist, um eine Vielzahl von Nachrichten (44a, 44b, 44c) aus einer Nachrichtendatenbank (10) in Übereinstimmung mit dem genannten Typ und dem genannten Status auszuwählen, um eine Vielzahl ausgewählter Nachrichten zu erhalten;
- Rangsfolgemittel (14b), die vorgesehen sind, um die ausgewählten Nachrichten in eine Rangfolge zu bringen, indem jeder ausgewählten Nachricht innerhalb des Szenarios eine Standardwahrscheinlichkeit für eine Standardentwicklung des Szenarios zugewiesen wird, wobei die genannten Standardwahrscheinlichkeiten durch das Kommunikationsscript aus einer zuvor gespeicherten Nachschlagetabelle geladen werden, wobei eine Nachricht mit einer höheren relativen Relevanz für den aktuellen Status des Szenarios höherrangig eingestuft wird;
- eine Benutzerschnittstelle (8), die vorgesehen ist, um dem Bediener die Vielzahl der ausgewählten Nachrichten zusammen mit ihrem Rang (46a, 46b, 46c) in einer Liste (18) vorzulegen.

3. System nach Anspruch 2, wobei die ausgewählten Nachrichten (44a, 44b, 44c) einen konfigurierbaren Textstring (48) umfassen, wobei das genannte System einen Textgenerator (34) umfasst, um den genannten String zu konfigurieren.

4. System (6) nach Anspruch 2, wobei der Dialog durch in den Räumlichkeiten des Kunden angeordnete Überwachungsmittel oder durch an seinem Körper angeordnete Überwachungsmittel ausgelöst wird.

5. System (6) nach Anspruch 4, wobei die Überwachungsmittel einen Sensor für die physiologische Verfassung umfassen, um im Fall einer Abnormalität der physiologischen Verfassung des Kunden den Dialog mit der Anrufzentrale zu initiieren.

## Revendications

1. Procédé d'acheminement d'un dialogue entre un opérateur d'un centre d'appel et un client au moyen d'un script de communication, ledit script de communication étant conçu pour suivre un scénario correspondant au cas d'un client par présentation d'une pluralité de messages à l'opérateur, ledit procédé comprenant les étapes consistant à :
- déterminer un type dudit scénario ;
- déterminer un état actuel dudit scénario ;
- fournir le script de communication correspondant audit type, ledit script étant conçu pour sélectionner une pluralité de messages à partir d'une base de données de messages afin de produire les messages sélectionnés, ladite sélection étant réalisée en accord avec ledit type et ledit état ;
le procédé étant **caractérisé par** :
- l'attribution pour chaque message sélectionné d'une pertinence relative par rapport à l'état actuel du scénario en affectant une probabilité par défaut à chaque message sélectionné au sein du scénario pour une évolution standard du scénario, lesdites probabilités par défaut étant chargées à partir d'une table de correspondance pré-enregistrée par le script de communication ;
- le classement des messages sélectionnés, un message de plus grande pertinence relative par rapport à l'état actuel du scénario étant mieux classé ; et
- la présentation de la pluralité desdits messages sélectionnés conjointement avec leur rang à l'opérateur dans une liste au moyen d'une interface utilisateur.

2. Système (6) conçu pour acheminer un dialogue entre un opérateur d'un centre d'appel et un client, ledit système comprenant un script de communication (44) conçu pour suivre un scénario correspondant au cas d'un client par présentation d'une pluralité de messages à l'opérateur, ledit système comprenant en outre :
- des moyens (3, 7) pour déterminer un type du scénario ;
- des moyens (11) pour déterminer un état actuel du scénario ;
**caractérisé en ce qu'**il comprend en outre :
- un générateur (9) du script de communication (44), ledit générateur étant conçu pour sélectionner une pluralité de messages (44a, 44b, 44c) à partir d'une base de données de messages (10) en accord avec ledit type et ledit état actuel afin d'obtenir une pluralité de messages sélectionnés ;
- des moyens de classement (14b) conçus pour classer les messages sélectionnés en affectant une probabilité par défaut à chaque message sélectionné au sein du scénario pour une évolution standard du scénario, lesdites probabilités par défaut étant chargées à partir d'une table de correspondance pré-enregistrée par le script de communication, le message de plus grande pertinence par rapport à l'état actuel du scénario étant mieux classé ;
- une interface utilisateur (8) conçue pour présenter les messages sélectionnés conjointement avec leur rang (46a, 46b, 46c) à l'opérateur dans une liste (18).

3. Système selon la revendication 2, dans lequel les messages sélectionnés (44a, 44b, 44c) comprennent une chaîne de texte configurable (48), ledit système comprenant en outre un générateur de texte (34) conçu pour configurer ladite chaîne.

4. Système (6) selon la revendication 2, dans lequel le dialogue est déclenché par des moyens de contrôle disposés dans les locaux du client ou par des moyens de contrôle disposés sur son corps.

5. Système (6) selon la revendication 4, dans lequel les moyens de contrôle comprennent un détecteur d'état physiologique conçu pour initier le dialogue avec le centre d'appel dans le cas d'une anomalie de l'état physiologique du client.
